# EUROPEAN PATENT APPLICATION

(11) **EP 1 174 042 A1**
(43) Date of publication of application: **23.01.2002**
(21) Application number: 00115391.5
(22) Date of filing: 17.07.2000
(51) Int. Cl.: A23L 1/10, A23L 1/105, A23L 1/20, A23L 1/22, A23L 1/36, A23L 1/39

(54) **Plant seed product and process for its preparation**

(71) Applicant: Société des Produits Nestlé S.A., 1800 Vevey (CH)
(72) Inventor: Mahr, Birgit, 84453 Mühldorf (DE)
(74) Representative: Thomas, Alain

(57) **Abstract**

The invention concerns a plant seed product comprising
- at least 5 % plant seeds,
- water,
- at least one ingredient selected from the group consisting of sugar, salt, starch, thickener, oil, fat, emulsifier, acid and a combination thereof.

The plant seed is taken in the group consisting of soybeans, lupines, cowpeas, sunflower seeds, rape seeds, palm kernels, chickpeas and peanuts.

## Description

### Field of the invention

The present invention relates to new plant seed products and the process for its preparation.

### Background of the invention

Traditionally seeds like soybeans, lupines, cowpeas are prepared as foodstuff in many countries. The preparation often includes a soaking step followed by cooking of the seeds, which are then eaten directly. In addition to this, milk can be prepared from these raw materials by milling of the seeds and separation of the insoluble substances. This milk can be spray dried to obtain milk powder or cheese and yoghurt like products, for example Tofu, can be produced by fermentation of these milks. Soy protein concentrates and isolates are obtained as by-products of the production of soybean oil. These protein powders are widely used in all kind of products, for example in bakery products, meat products, meat substitutes, desserts, and in cold and hot sauces.

Numerous patents on soya can be found for all of these applications. These patents often include other plant seeds, for examples lupines. Special processes are applied to increase the nutritional value of protein powders and to solve flavour problems by fermentation with special organisms. A lot of patents relate to the development of processes with higher yields and the application of protein concentrates or isolates in special products.

The aim of the present invention is to have a new plant seed product, which is processed directly from plant seeds, and not from extracts, seed powders, or protein concentrates or isolates. Furthermore, the aim of the invention is to obtain a product without any off-taste.

### Summary of the invention

The invention concerns a plant seed product comprising
- at least 5 % plant seeds,
- water,
- at least one ingredient selected from the group consisting of sugar, salt, starch, thickener, oil, fat, emulsifier, acid and a combination thereof.

The invention concerns more particularly a plant seed product comprising at least 5 % plant seeds, between 0 and 30% sugar, between 0 and 6 % salt, at least 15 % water, between 0 and 5% starch or other thickeners, between 0 and 65 % oils or fats, between 0 and 3 % lactic acid, acetic acid, citric acid or other food acids or combinations of food acids and between 0 and 5 % emulsifiers, flavors and/or spices.

The invention concerns further the process for the preparation of the plant seed product.

### Detailed description of the invention

According to a first embodiment, the plant seed product is a sweet spreadable product. This sweet spreadable product comprises at least 10 % plant seeds, at least 10 % sugar, between 0 and 1.5 % salt, between 0 and 5% starch or other thickeners, at least 30 % water, between 0 and 30 % oils or fats, between 0 and 1.5 % lactic acid or another food acid and between 0 and 5% emulsifier and between 0 and 2 % flavors.

According to a second embodiment, the plant seed product is a creamy low or medium fat mayonnaise. This mayonnaise comprises at least 5 % plant seeds, between 0 and 15 % sugar, between 0 and 4 % salt, at least 25 % water, between 0 and 40 % oils or fats, between 0 and 5% starch or other thickeners, between 0 and 2 % lactic acid or another food acid, between 0 and 5 % emulsifier, like egg yolk, whey protein or a low molecular weight emulsifier and comprising further between 0 and 5 % mustard, between 0 and 5 % vinegar and between 0-5% flavors and/or spices.

According to a third embodiment, the plant seed product is a spicy seasoning or spread. This product comprises at least 10 % plant seeds, between 0 and 20 % sugar, between 0.5 and 6 % salt, at least 20 % water, between 0 and 35 % oils or fats, between 0 and 2 % lactic acid or another food acid, between 0 and 5% starch or other thickeners, between 0 and 5 % emulsifier and comprising further between 0 and 5 % vinegar and between 0-10% flavors and/or spices.

According to a fourth embodiment, the plant seed product is a ketchup or a sauce. This product comprises at least 10 % plant seeds, at least 10 % sugar, between 0 and 3 % salt, at least 40 % water, between 0 and 5 % oils or fats, between 0 and 1.5 % lactic acid or another food acid, between 0 and 5% starch or other thickeners, between 0 and 1 % spices and comprising further between 5 and 15 % vinegar and between 0-10% flavors and/or spices.

According to a last embodiment, the plant seed product is a sweet or culinary mousse. This mousse comprises at least 5 % plant seeds, at least 10 % sugar, between 0 and 1.5 % salt, at least 15 % water, between 0 and 5% starch or other thickeners, between 20 and 40 % oils or fats, between 0 and 1.5 % lactic acid or another food acid, between 0 and 5 % emulsifier and comprising further between 0 and 3 % vinegar, between 0,5 and 2 % gelatine or another jelling agent and between 0 and 7 % foaming agent and between 0-5% flavors and/or spices.

The plant seeds are taken from the group consisting of soybeans, lupines, cowpeas, sunflower seeds, rape seeds, palm kernels, chickpeas and peanuts. It is possible to have whole dehulled or non-dehulled seeds. The sugars used are all possible sugars used in the food industry, for example fructose, glucose, saccharose, dextrose and also artificial sweeteners. The starch can be any native and modified starch, like modified waxy maize or native tapioca starch. The thickeners are taken from the group consisting of galactomannans, pectins, xanthan and any other thickening agent. The oils and fats are any possible of the compounds used in the food industry. The emulsifier used is any type of known emulsifiers, like milk proteins, egg products, lecithins and technical emulsifiers , like Tween 60 from the Company Grünau.

The present invention concerns furthermore the process for preparing the plant seed product, said process comprising :
a) Atmospheric cooking or making a steam treatment of the non-dehulled or dehulled seeds ,
b) milling the steamed seeds with water and other ingredients under high shear,
c) mixing with the rest of the ingredients and with the oil or fat base,
d) pasteurising or sterilisation of the obtained mixture and
e) proceeding to a cold, a hot- or an aseptic cold filling.

The seeds are cleaned and are used dehulled or non-dehulled. In the case of dehulling the seeds, this step can be carried out on dry state. It is then possible to soak the seeds or to directly make the cooking or steaming. The cooking is carried out at 85 to 100 °C for at least 15 minutes and the steaming is carried out at a temperature of 100 to 150°C for at least 10 minutes. Preferably, the cooking is carried out in 15 to 60 minutes and the steaming at a temperature of 110 to 130 °C for between 10 and 40 minutes.

It is also possible to dehull the seeds wet after the cooking or the steaming step. The cooked or steamed dehulled or non-dehulled seeds can be roasted to create a special flavour profile in the product.

The cooked, steamed or roasted seeds are then mixed with other recipe ingredients, like water, acid, sugar, salt and spices and can be milled continuously or non-continuously in a known milling device, like a colloid mill or ball mill or others.

This base can be fermented with enzymes or microorganisms to improve texture and taste. This fermentation can be carried out before or after the milling of the seeds.

On this milled base, oils and fats are added and emulsified with different emulsification machines known in the technique or with a high pressure homogeniser. If the plant seed product is preparad without oil or fat, the emulsification step is not necessary.

The emulsified base can be used directly as spread or mayonnaise or can be foamed to obtain a mousse. Furthermore, steamed or cooked whole seeds can be added to the milled seed base or to an emulsion base to obtain products with a granular structure. The products are pasteurised or sterilised and filled cold, hot or aseptically. Furthermore, the products can also be filled cold and afterwards be sterilised in the packaging.

### Examples

### a. Sweet chocolate spread from Lupines

### Recipe :

| Ingredients | / % |
|---|---|
| Lupines base | 60.10 |
| Salt | 0.50 |
| Sugar | 21.00 |
| Cacao | 2.50 |
| Butter Flavour | 0.50 |
| Chocolate Flavour | 0.25 |
| Cocos fat | 15.00 |
| | 99.85 |

| lupines base | / % |
|---|---|
| Soaked, dehulled lupines | 42,50 |
| *dry lupines* | *21,25* |
| *water* | *21,25* |
| Water | 56,50 |
| Lactic Acid | 1,00 |
| | 100,00 |

### Characterisation:

| Composition lupines spread | /% |
|---|---|
| water | 48,19 |
| protein | 5,62 |
| fat | 16,28 |
| sugar | 21,00 |
| salt | 0,50 |
| acetic acid | |
| lactic acid | 0,54 |
| spices | 3,40 |
| lupines minerals | 0,51 |
| lupines carbohydrates | 3,96 |
| | 100,00 |

### Process:

a) Soaking of whole lupines over night in water that is adjusted with vinegar to pH 4.
b) Dehulling of the wet lupines.
c) Cooking of the dehulled lupines with water and lactic acid in a mixer, heating time 15 minutes at 85°C.
d) Mixing and coarse milling of the dehulled hot lupines with water and lactic acid in a mixer with a knife.
e) Milling of the coarse base with a mill . This results in a smooth lupines base.
f) Mixing of this base with the other recipe ingredients except for the cocos fat.
g) Melting of the cocos fat.
h) Addition of the melted cocos fat to the other ingredients.
i) Heating to 85°C under high shear.
j) Hot filling.

The final product has a viscosity of 26.70 Pas measured at 10 /s.

### 2. Culinary sweet spread from cowpeas

### Recipe:

| Ingredients | /% |
|---|---|
| cowpeas base | 37,50 |
| base emulsion | 37,50 |
| salt | 0,50 |
| sugar | 17,77 |
| dextrose sirope | 4,50 |
| chillies powder | 0,04 |
| pepper | 0,20 |
| sodiumglutamate | 0,05 |
| paprika | 0,35 |
| cinnamon | 0,04 |
| spices | 1,25 |
| carrots extract | 0,20 |
| red roots extract | 0,10 |
| | 100,00 |

| cowpeas base | % |
|---|---|
| dehulled cowpeas | 40,000 |
| water | 59,184 |
| lactic acid | 0,800 |
| enzyme Grindamyl A 200 | 0,016 |
| | 100,000 |

| base emulsion | /% |
|---|---|
| vinegar, 11% | 5,40 |
| whey protein | 2,50 |
| water | 12,10 |
| sunflower oil | 80,00 |
| | 100,00 |

### Characterisation:

| Composition Cowpeas Spread | /% |
|---|---|
| water | 31,57 |
| protein | 4,16 |
| fat | 30,21 |
| sugar | 20,92 |
| salt | 0,50 |
| acetic acid | 0,22 |
| lactic acid | 0,30 |
| cowpeas starch | 6,00 |
| cowpeas carbohydrates | 3,00 |
| cowpeas minerals | 0,53 |
| spices | 2,59 |
| | 100,00 |

### Process :

a) steaming of the dehulled cowpeas at 120°C for 30 minutes
b) mixing of the steamed cowpeas with water, lactic acid and enzyme in a mixer. Coarse milling with a knife. Enzymatic fermentation for 1 hour.
c) Milling of the coarse milled and enzymatically treated base with a mill .
d) Production of the base emulsion with a mayonnaise line.
e) Mixing of the milled cowpeas base with the base emulsion 1:1 and processing of this mixture with a high pressure homogeniser.
f) Addition of the other ingredients and heating under shear to 85°C (pasteurisation).
g) Hot filling.

The final product has a viscosity of 21.80 Pas measured at 10 /s.

### 3. Ketchup from fermented soybeans

### Recipe:

| Ingredients | /% |
|---|---|
| fermented soya matrix | 48,00 |
| onions powder | 0,60 |
| garlic powder | 0,35 |
| salt | 2,20 |
| black pepper | 0,12 |
| sugar | 27,50 |
| vinegar, 11% | 10,00 |
| sodium-benzoat | 0,10 |
| cinnamon | 0,10 |
| paprika | 0,10 |
| chilli powder | 0,04 |
| carrots extract | 0,25 |
| water | 10,64 |
| | 100,00 |

| fermented soya matrix | /% |
|---|---|
| soybeans | 25,00 |
| sugar | 5,00 |
| water | 66,50 |
| lactic acid | 0,50 |
| lactobacillus bouillon | 3,00 |
| | 100,00 |

### Characterisation:

| Composition Keso/005 | /% |
|---|---|
| water | 54,24 |
| protein | 4,20 |
| fat | 2,40 |
| sugar | 29,90 |
| salt | 2,20 |
| acetic acid | 1,10 |
| lactic acid | 0,22 |
| spices | 3,34 |
| soy fibers | 1,80 |
| soy minerals | 0,60 |
| soy carbohydrates | 0,72 |
| | 100,00 |

### Process:

a) steaming of whole soybeans at 120°C for 30 minutes.
b) mixing of the steamed soybeans with sugar, water and lactic acid and coarse milling in a mixer with a knife.
c) Milling of this base with a mill (mustard process).
d) Addition of the Lactobacillus bouillon and fermentation for 20 hours at 30°C.
e) Heating to 80°C, 1 minute to stop the fermentation.
f) Addition of all other ingredients, heating to 85°C and hot filling.

The final product has a viscosity of 2.80 Pas measured at 10 /s.

### 4. Low fat- Mayonnaise with lupines

### Recipe:

| Ingredients | / % |
|---|---|
| lupines base | 63,75 |
| mustard | 3,40 |
| sugar | 12,23 |
| salt | 1,70 |
| vinegar, 11% | 3,82 |
| whey protein concentrate | 3,00 |
| sunflower oil | 12,00 |
| spices | 0,10 |
| | 100,00 |

| lupines base | / % |
|---|---|
| lupines | 20,00 |
| water | 75,00 |
| sugar | 5,00 |
| | 100,00 |

### Composition:

| Composition Mllu/003 | /% |
|---|---|
| water | 54,99 |
| protein | 7,41 |
| fat | 13,28 |
| sugar | 15,42 |
| salt | 1,70 |
| acetic acid | 0,42 |
| lactic acid | 0,00 |
| spices | 2,32 |
| lupines minerals | 0,51 |
| lupines carbohydrates | 3,95 |
| | 100,00 |

### Process:

a) soaking of whole lupines in water that is adjusted with vinegar to pH 4 over night.
b) steaming of the whole lupines at 120°C, 30 minutes.
c) mixing of the steamed lupines with water and sugar and coarse milling in a mixer with knife.
d) Milling of the coarse base with a mill.
e) Mixing of the milled base with all other ingredients except for the oil.
f) Emulsification of the oil.
g) Heating of the emulsion to 85°C and hot filling.

The final product has a viscosity of 41.40 Pas measured at 10 /s.

### 5. Mousse from soybeans

### Recipe:

| Ingredients | % |
|---|---|
| soya base | 35,00 |
| base emulsion | 35,00 |
| foaming agent DP 45 | 5,00 |
| salt | 0,50 |
| sugar | 20,50 |
| cacao | 2,60 |
| sweetener Acesulfam K | 0,10 |
| chocolate flavor | 0,30 |
| gelatine | 1,00 |
| | 100,00 |

| soya base | /% |
|---|---|
| dehulled soybeans | 25,00 |
| sugar | 5,00 |
| water | 69,50 |
| lactic acid | 0,50 |
| | 100,00 |

| base emulsion | /% |
|---|---|
| vinegar, 11% | 5,40 |
| whey protein | 2,50 |
| water | 12,10 |
| sunflower oil | 80,00 |
| | 100,00 |

### Characterization:

| Composition soya mousse | /% |
|---|---|
| water | 25,33 |
| protein | 5,33 |
| fat | 32,45 |
| sugar | 26,78 |
| salt | 0,50 |
| acetic acid | 0,21 |
| lactic acid | 0,16 |
| soybean carbohydrates | 0,53 |
| soybean minerals | 0,44 |
| soybean fibers | 1,31 |
| spices | 6,97 |
| | 100,00 |

### Process:

a) steaming of dehulled soybeans at 120°C for 30 minutes.
b) mixing of steamed soybeans with water, sugar and lactic acid in a mixer and coarse milling with a knife.
c) Fine milling of the coarse base with a mill (mustard process).
d) Adding of all other ingredients and processing with a high pressure homogeniser at 400 bar.
e) Pasteurisation at 90°C.
f) Cooling to 30°C.
g) Foaming with Nitrogen in a dispersing machine, Overrun 30%.
h) Aseptically cold filling.

The final product has a viscosity of 24.40 Pas measured at 10 /s.

### 6. Salty spicy spread from cowpeas

| Ingredients | % |
|---|---|
| cowpeas base | 40,030 |
| emulsion base | 36,550 |
| water | 5,000 |
| fresh dried Capsicum Bits | 0,900 |
| freeze dried red chilli Bits | 0,400 |
| sugar | 7,000 |
| tomato paste (28°ß) | 3,600 |
| sodium benzoate | 0,100 |
| potassium sorbate | 0,100 |
| chilli Puree | 1,800 |
| citric acid | 0,220 |
| acetic acid 60% | 0,800 |
| salt | 3,500 |
| | 100,000 |

| cowpeas base | % |
|---|---|
| dehulled cowpeas | 30,000 |
| water | 68,992 |
| lactid acid | 1,000 |
| enzmye Fungamyl 800 L | 0,003 |
| enzyme AMG 300 | 0,005 |
| | 100,000 |

| emulsion base | % |
|---|---|
| sunflower oil | 80,000 |
| whey protein 60 | 2,500 |
| acetic add 60% | 1,000 |
| water | 16,500 |
| | 100,000 |

| Composition | /% |
|---|---|
| water | 43,186 |
| protein | 3,430 |
| fat | 29,240 |
| sugar | 7,000 |
| salt | 3,500 |
| acetic add | 0,699 |
| lactic add | 0,400 |
| citric add | 0,220 |
| cowpeas starch (enzymatically degraded) | 4,804 |
| cowpeas minerals | 0,432 |
| cowpeas carbohydrates (without starch) | 2,402 |
| spices | 4,686 |
| | 100,000 |

### Process :

a) Weighing of cowpeas and water in a mixer
b) Indirect heating to 100°C without milling the cowpeas, holding time at 100°C: 30 minutes
c) Coarse milling with a knife and cooling down to 55°C
d) Addition of enzymes to the mixer. Enzymatic fermentation for 30 minutes at 55°C.
e) Addition of lactic acid
f) Milling of the coarse milled and enzymatically treated matrix with a mill (mustard process).
g) Production of the base emulsion with a mayonnaise line.
h) Weighing of all ingredients in the Stephan mixer according to the recipe and heating under shear to 85°C (pasteurisation).
i) Hot filling.

The final product has a viscosity of 14.70 Pas measured at 10 /s.

### 7. Granular cowpeas spread

| Ingredients | % |
|---|---|
| cooked cowpeas | 46,930 |
| *dry cowpeas* | *21,119* |
| *water* | *25,811* |
| emulsion base | 37,500 |
| black pepper (coarsly milled) | 1,000 |
| sugar | 7,000 |
| lactic acid 90% | 0,500 |
| acetic acid 60% | 0,800 |
| citric acid | 0,220 |
| potassium sorbate | 0,100 |
| sodium benzoate | 0,100 |
| dehydrated garlic bits | 2,350 |
| salt | 3,500 |
| | 100,000 |

| cooked cowpeas | % |
|---|---|
| dehulled cowpeas | 16,700 |
| water | 83,295 |
| enzmye Fungamyl 800 L | 0,002 |
| enzyme AMG 300 | 0,003 |
| | 100,000 |

| emulsion base | % |
|---|---|
| sunflower oil | 80,000 |
| whey protein 60% | 2,500 |
| acetic acid 60% | 1,000 |
| water | 16,500 |
| | 100,000 |

| Composition | /% |
|---|---|
| water | 32,519 |
| protein | 5,631 |
| fat | 30,296 |
| sugar | 7,000 |
| salt | 3,500 |
| acetic add | 1,025 |
| lactic acid | 0,450 |
| citric add | 0,220 |
| cowpeas starch (enzymatically degraded) | 8,448 |
| cowpeas minerals | 0,760 |
| cowpeas carbohydrates (without starch) | 4,224 |
| spices | 5,928 |
| | 100,000 |

### Process:

a) Weighing of cowpeas and water in the mixer
b) Indirect heating to 100°C without milling the cowpeas, holding time at 100°C: 30 minutes
c) Cooling down to 55°C (without milling)
d) Addition of enzymes to the mixer. Enzymatic fermentation for 30 minutes at 55°C.
e) Remove water and store cooked whole cowpeas at 5°C.
f) Production of the base emulsion with a mayonnaise line.
g) Weighing of all ingredients in the mixer according to the recipe and heating under low shear to 85°C (pasteurisation).
h) Hot filling.

The final product has a viscosity of 14.70 Pas measured at 10 /s.

### 8. Spicy spread from soybeans

| Ingredients | % |
|---|---|
| soya base | 82,300 |
| sodium benzoate | 0,100 |
| potassium sorbate | 0,100 |
| citric acid | 0,245 |
| acetic acid 100 % | 0,300 |
| water | 14,055 |
| black pepper | 1,300 |
| garlic bits | 1,600 |
| | 100,000 |

| soya base | % |
|---|---|
| non - dehulled soybeans | 28,000 |
| water | 57,250 |
| lactid acid | 1,000 |
| acetic add 100% | 0,600 |
| sugar | 9,150 |
| salt | 4,000 |
| | 100,000 |

| Composition | /% |
|---|---|
| water | 63,646 |
| protein | 8,500 |
| fat | 5,125 |
| sugar | 7,500 |
| salt | 3,292 |
| acetic acid | 0,796 |
| lactic acid | 0,796 |
| citric acid | 0,245 |
| soya minerals | 1,200 |
| soya carbohydrates | 5,800 |
| spices | 3,100 |
| | 100,000 |

### Process:

a) Weighing of soybeans and water in a mixer
b) Indirect heating to 120°C without milling the soybeans, holding time at 120°C: 30 minutes
c) Coarse milling with a knife and cooling down to 55°C
d) Addition of all other soya base ingredients.
e) Milling of the coarse milled base with a mill (mustard process).
f) Pre-pasteurisation of spice mix (85°C, 5 minutes)
g) Mixing of soya base and spice mix.
h) Cold filling.

### 9. Spread Asia from sunflower seeds

| Ingredients | % |
|---|---|
| sunflower seed base | 78,700 |
| pineapple juice conc. | 2,500 |
| curry | 0,900 |
| citric acid | 0,250 |
| sugar | 10,000 |
| glucose sirop | 6,000 |
| aroma | 1,650 |
| | 100,000 |

| sunflower seed base | % |
|---|---|
| dehulled sunflower seed | 36,000 |
| water | 49,350 |
| lactid acid | 1,000 |
| acetic acid 100% | 0,500 |
| sugar | 9,150 |
| salt | 4,000 |
| | 100,000 |

| Composition | % |
|---|---|
| water | 41,005 |
| protein | 7,083 |
| fat | 15,583 |
| sugar | 24,800 |
| salt | 3,148 |
| acetic acid | 0,394 |
| lactic acid | 0,708 |
| citric acid | 0,250 |
| sunflower seed minerals | 1,130 |
| sunflower seed carbohydrates | 4,249 |
| aroma | 1,650 |
| | 100,000 |

### Process:

a) Weighing of sunflower seeds and water in the mixer
b) Indirect heating to 100°C without milling the sunflower seeds, holding time at 100°C: 30 minutes
c) Addition of all other sunflower seed base ingredients.
d) Milling of the coarse milled base with a mill (mustard process).
e) Pasteurisation of milled base and all other ingredients in a mixer at 85°C, 3 min
f) Hot filling

### 10. Mild spread from peanuts

| Ingredients | % |
|---|---|
| peanuts base | 90,000 |
| sugar | 5,000 |
| water | 5,000 |
| | 100,000 |

| peanuts base | % |
|---|---|
| dehulled peanuts | 45,000 |
| water | 40,350 |
| lactid acid | 1,000 |
| acetic acid 100% | 0,500 |
| sugar | 9,150 |
| salt | 4,000 |
| | 100,000 |

| Composition | /% |
|---|---|
| water | 41,310 |
| protein | 10,530 |
| fat | 21,559 |
| sugar | 13,235 |
| salt | 3,600 |
| acetic acid | 0,450 |
| lactic acid | 0,810 |
| peanuts minerals | 1,013 |
| peanuts carbohydrates | 7,493 |
| | 100,000 |

### Process:

a) Weighing of peanuts and water in the mixer
b) Indirect heating to 100°C without milling the soybeans, holding time at 100°C: 30 minutes
c) Addition of all other peanuts spread ingredients.
d) Milling of the coarse milled base with a mill (mustard process).
e) Pasteurisation of spread (85°C, 3 minutes)
f) Hot filling.

### 11.Spread from soybeans with reduced acidity

| | Ingredients | % |
|---|---|---|
| soyapulp | soybeans | 16,39 |
| | water | 16,39 |
| | | |
| | | |
| | mustard oil | 0,03 |
| | sunflower oil | 30 |
| | salt | 1,07 |
| | vinegar | 3,27 |
| | sugar | 3,73 |
| | citric acid | 0,39 |
| | lemon juice | 0,37 |
| | whey powder | 10,79 |
| | water | 4,17 |
| | starch | 1 |
| | K-sorbate | 0,4 |
| | Na-benzoate | 0,4 |
| | spices | 7,6 |
| | condensate | 4 |
| | | 100 |

| Composition | % |
|---|---|
| water | 29,00 |
| acids | 2,81 |
| | |
| preservatives | 0,80 |
| protein | 7,14 |
| fat | 33,61 |
| salt | 1,04 |
| carbohydrates | 15,54 |
| fibers | 2,46 |
| spices | 7,60 |
| | 100,00 |

| Microbiologcial parameters | |
|---|---|
| acetic acid/water | 0,89 |
| sorbate/water | 1,36 |
| benzoate/water | 1,36 |
| pH | 4,60 |
| aw | 0,88 |

### Process:

a) Weighing of soybeans and excess water in steam cooker at 1,7 bar for 30 minutes
b) Steam treatment at 1,7 bar for 30 minutes
c) Preparing of the soya pulp in a bowl cutter
d) Mixing of soya pulp, starch slurry and other ingredients in a heater
e) Emulsification with the colloid mill
f) Sterilisation of the spread at 128°C, 30 s
g) Aseptic or hot filling.

## Claims

1. Plant seed product comprising
- at least 5 % plant seeds,
- water,
- at least one ingredient selected from the group consisting of sugar, salt, starch, thickener, oil, fat, emulsifier, acid and a combination thereof.

2. Plant seed product according to claim 1 comprising at least 5 % plant seeds, between 0 and 30% sugar, between 0 and 6 % salt, at least 15 % water, between 0 and 5% starch or other thickeners, between 0 and 65 % oils or fats, between 0 and 3 % lactic acid, acetic acid, citric acid or other food acids or combinations of food acids and between 0 and 5 % emulsifiers, flavors and/or spices.

3. Plant seed product according to claim 1 or 2, which is a sweet spreadable product, comprising at least 10 % plant seeds, at least 10 % sugar, between 0 and 1.5 % salt, between 0 and 5% starch or other thickeners, at least 30 % water, between 0 and 30 % oils or fats, between 0 and 1.5 % lactic acid or another food acid and between 0 and 5% emulsifier and between 0 and 2 % flavors.

4. Plant seed product according to claim 1 or 2, which is a creamy low or medium fat mayonnaise, comprising at least 5 % plant seeds, between 0 and 15 % sugar, between 0 and 4 % salt, at least 25 % water, between 0 and 40 % oils or fats, between 0 and 5% starch or other thickeners, between 0 and 2 % lactic acid or another food acid, between 0 and 5 % emulsifier, like egg yolk, whey protein or a low molecular weight emulsifier and comprising further between 0 and 5 % mustard, between 0 and 5 % vinegar and between 0-5% flavors and/or spices.

5. Plant seed product according to claim 1 or 2, which is a spicy seasoning or spread, comprising at least 10 % plant seeds, between 0 and 20 % sugar, between 0.5 and 6 % salt, at least 20 % water, between 0 and 35 % oils or fats, between 0 and 2 % lactic acid or another food acid, between 0 and 5% starch or other thickeners, between 0 and 5 % emulsifier and comprising further between 0 and 5 % vinegar and between 0-10% flavors and/or spices.

6. Plant seed product according to claim 1 or 2, which is a ketchup or a sauce, comprising at least 10 % plant seeds, at least 10 % sugar, between 0 and 3 % salt, at least 40 % water, between 0 and 5 % oils or fats, between 0 and 1.5 % lactic acid or another food acid, between 0 and 5% starch or other thickeners, between 0 and 1 % spices and comprising further between 5 and 15 % vinegar and between 0-10% flavors and/or spices.

7. Plant seed product according to claim 1 or 2, which is a sweet or culinary mousse, comprising at least 5 % plant seeds, at least 10 % sugar, between 0 and 1.5 % salt, at least 15 % water, between 0 and 5% starch or other thickeners, between 20 and 40 % oils or fats, between 0 and 1.5 % lactic acid or another food acid, between 0 and 5 % emulsifier and comprising further between 0 and 3 % vinegar, between 0,5 and 2 % gelatine or another jelling agent and between 0 and 7 % foaming agent and between 0-5% flavors and/or spices.

8. Plant seed product according to any of claims 1 to 7, wherein the plant seeds are taken in the group consisting of soybeans, lupines, cowpeas, sunflower seeds, rape seeds, palm kernels, chickpeas and peanuts.

9. A process for the preparation of a plant seed product according to any of claims 1 to 7, the process comprising :
a) Atmospheric cooking or making a steam treatment of the non-dehulled or dehulled seeds ,
b) milling the steamed seeds with water and other ingredients under high shear,
c) mixing with the rest of the ingredients and with the oil or fat base,
d) pasteurising or sterilisation of the obtained mixture and
e) proceeding to a cold, a hot- or an aseptic cold filling.

10. A process according to claim 9, wherein a fermentation is carried out before or after the milling of the seeds.

11. A process according to claim 9, wherein a roasting step is carried out on the base of the steamed non-dehulled or dehulled seeds.

12. A process according to claim 9 wherein the seeds are not milled but added to an emulsion base to get a granular seeds product.

13. A process according to any of claims 9 to 12, wherein atmospheric cooking is carried out for between 15 and 60 minutes.

14. A process according to any of claims 10 to 13, wherein the steam-treatment is carried out at 110-130°C for between 10 and 40 minutes.
